# FASCICULE DE BREVET EUROPEEN

(11) **EP 2 904 290 B1**
(45) Date de publication et mention de la délivrance du brevet: **04.01.2017**
(21) Numéro de dépôt: 13779293.3
(22) Date de dépôt: 23.09.2013
(51) Int. Cl.: F16D 13/58, F16D 3/66, F16F 15/134

(54) **DISPOSITIF D'AMORTISSEMENT DE TORSION A RESSORTS ET SIEGES BASCULANTS**
TORSIONSDÄMPFENDE VORRICHTUNG MIT FEDERN UND KIPPBAREN SITZEN
TORSION DAMPING DEVICE WITH SPRINGS AND TILTING SEATS

(30) Priorité: 04.10.2012 FR 1259438
(43) Date de publication de la demande: 12.08.2015
(73) Titulaire: Valeo Embrayages, 80009 Amiens Cedex 2 (FR)
(72) Inventeur: MALLEY, Matthieu, F-60000 Beauvais (FR); CAUMARTIN, Laurent, F-80600 Beauquesne (FR); NERRIERE, Adrien, F-80090 Amiens (FR)
(74) Mandataire: Cardon, Nicolas
(86) Numéro de dépôt international: PCT/FR2013/052216
(87) Numéro de publication internationale: WO 2014/053733

(56) Documents cités:
- FR-A1- 2 571 461
- FR-A1- 2 875 882

## Description

La présente invention concerne un dispositif d'amortissement de torsion du type comportant deux parties coaxiales montées rotatives l'une par rapport à l'autre à l'encontre de ressorts intervenant circonférentiellement entre elles.

Un tel dispositif amortisseur de torsion trouve notamment son application dans la constitution d'une friction d'embrayage, en particulier pour véhicule automobile, ou dans celle du volant d'inertie d'un tel véhicule automobile, alors communément appelé double volant amortisseur.

L'invention vise plus particulièrement le cas ou, entre chacune des extrémités de l'un au moins des ressorts, et d'autre part l'une et l'autre des parties coaxiales, intervient circonférentiellement un siège, dont une partie frontale assure l'appui et/ou le centrage d'au moins un tel ressort, et qui, par une partie dorsale, prend lui-même appui sur l'une et/ou l'autre des parties coaxiales, en étant monté pivotant par rapport à celles-ci autour d'un axe parallèle à leur propre axe de rotation.

Un tel dispositif est notamment décrit dans les documents FR 2 732 426 et EP-A-0 258 112.

Par leur montage pivotant, les sièges sur lesquels prennent appui les ressorts, parfois appelés coupelles, permettent en service à ces ressorts de travailler dans de bonnes conditions, même à plein couple, en conservant typiquement un certain parallélisme entre leurs extrémités.

Ils sont généralement en acier, typiquement en acier moulé, et peuvent optionnellement servir de support à des embouts en matière élastique ou plastique, qui, intervenant à la manière de butées à plein couple, permettent avantageusement une bonne répartition des efforts au sein des ressorts avant que certains au moins d'entre eux en viennent à devenir à spires jointives. Ils peuvent également être constitués entièrement de matière élastique ou plastique, et fabriqués notamment par moulage.

Ils s'opposent enfin avantageusement à la centrifugation des ressorts. Toutefois, cette action anti-centrifugation n'est généralement que d'efficacité limitée, les sièges pouvant eux-mêmes être éjectés de leurs logements.

Il a par ailleurs déjà été décrit dans le document FR 2 875 882 un dispositif d'amortissement de torsion comprenant des sièges pour ressorts dont l'axe de pivotement est déporté par rapport à une face dorsale du siège, de façon à améliorer le fonctionnement de ces sièges, en particulier vis-à-vis des risques d'éjection en dehors des logements. Chaque siège comprend une saillie de pivotement dorsale apte à pivoter dans deux logements ménagés dans les deux éléments coaxiaux, la saillie de pivotement étant délimitée notamment par une portion de cylindre, de section formée par un premier arc de cercle dont les tangentes aux extrémités de cet arc forment un premier angle aigu. La section de la partie correspondante de chaque logement est formée par un deuxième arc de cercle, de même centre et rayon de courbure que le premier arc de cercle, dont les tangentes aux extrémités de cet arc forment un deuxième angle aigu supérieur au premier angle aigu. Les axes de pivotement des deux saillies sont parallèles entre eux à une distance L entre eux, et compris dans un plan situé à une distance R de l'axe de rotation. Chaque axe de pivotement est déporté par rapport à la face plane du siège correspondant d'une valeur d, vers l'extérieur du ressort.

Bien que cette technique donne de bons résultats aux vitesses modérées ou moyennes, il a cependant été constaté qu'elle ne permettait pas de résoudre les problèmes de fonctionnement à haut régime, tels que l'éjection des sièges hors de leur logement et/ou des chocs avec ces logements.

L'invention a notamment pour but d'obtenir un fonctionnement satisfaisant des sièges d'un amortisseur de torsion à ressorts, y compris à haut régime.

A cet effet, l'invention a pour objet un dispositif d'amortissement de torsion du type comprenant deux éléments coaxiaux montés rotatifs l'un par rapport à l'autre autour d'un axe de rotation, à l'encontre d'au moins un ressort intervenant circonférentiellement entre eux, et deux sièges de positionnement d'extrémités de ce ressort ;
dispositif dans lequel :
pour chaque siège, sans sollicitations de vitesse de rotation ni de couple :
   - ce siège comprend une partie frontale d'appui et/ou de centrage d'une extrémité du ressort, et une partie dorsale comportant une saillie axiale de pivotement apte à pivoter autour d'un axe de pivotement parallèle à l'axe de rotation, dans deux logements de pivotement associés à cette saillie, ménagés respectivement dans l'un et à l'autre des deux éléments coaxiaux ;
   - la saillie axiale de pivotement est délimitée par une surface de portée en partie formée par une portion de cylindre de section circulaire, destinée à venir en contact avec une partie correspondante d'une surface de portée complémentaire de chaque logement de pivotement associé à la saillie ;
   - la section de la portion de cylindre est formée par un premier arc de cercle dont une tangente à une extrémité radialement extérieure de cet arc forme avec un axe du ressort un angle aigu de valeur α propre à ce siège ;
   - la section de la partie correspondante de la surface de portée complémentaire de chaque logement est formée par un deuxième arc de cercle, propre à ce logement, sensiblement de même centre et de rayon de courbure sensiblement identique à celui du premier arc de cercle, dont une tangente à une extrémité radialement extérieure de cet arc forme avec l'axe du ressort un angle aigu γ propre à ce logement, et supérieur à α, avec γ = α + µ;
   - dispositif dans lequel, sans sollicitations de vitesse de rotation ni de couple : les axes de pivotement correspondant aux saillies des deux sièges passent chacun par le centre d'un premier arc de cercle, sont sensiblement équidistants de l'axe de rotation, parallèles entre eux à une distance L entre eux, et compris dans un plan situé à une distance R de l'axe de rotation ;
   **caractérisé en ce que** pour au moins l'un des deux sièges, dit premier siège, l'angle γ propre à chaque logement associé à la saillie de ce premier siège appartient à l'intervalle : [arctg(L/2R) - δ/8, arctg(L/2R) +δ], de préférence à l'intervalle [arctg(L/2R) - δ/12, arctg(L/2R) + 0,5 δ], et de façon très préférée est sensiblement égal à arctg(L/2R), dans lequel δ représente l'angle maximum de débattement du dispositif d'amortissement, entre une position sans sollicitations de vitesse de rotation ni de couple et une position en butée sous l'effet d'un couple total transmis par le moteur.

On a en effet trouvé que cette relation particulière entre γ, δ, L et R permet d'éviter l'éjection des sièges hors de leurs logement à haut régime, typiquement à des vitesses de rotation du moteurs supérieures ou égales à 1200 tours/minute.

L est la distance des centres de rotation des deux saillies, considérée lorsque le dispositif est monté au repos, sans sollicitation de vitesse de rotation (sans forces centrifuges) ni de couple quand chaque saillie est en contact typiquement cylindrique avec le fond de son logement ; et R est la distance du plan contenant les axes de pivotement à l'axe de rotation.

Si l'on considère l'angle ϕ entre les centres de rotation des deux saillies, pris à partir de l'axe de rotation, dans un plan perpendiculaire à cet axe de rotation (cet angle représente l'ouverture angulaire de l'amortisseur), δ, qui représente l'angle maximum de débattement de l'amortisseur, est égal à la variation de l'ouverture angulaire ϕ de l'amortisseur, entre une position sans sollicitations de vitesse de rotation ni de couple et une position en butée sous l'effet d'un couple total exercé par le moteur. Cette butée peut être une butée physique séparée du ressort, ou bien le ressort lui-même dont les spires deviennent jointives lorsque l'ouverture de l'amortisseur a diminué de la valeur δ, soit de l'angle de débattement maximum de cet amortisseur (le terme amortisseur désignant le dispositif d'amortissement de torsion).

La condition ci-dessus permet également d'éviter, ou de limiter fortement les chocs entre un siège et les logements associés à ce siège, un siège décollant typiquement du logement de l'un des deux éléments coaxiaux lors du fonctionnement avec sollicitations de torsion.

Un angle γ particulièrement adapté est donc typiquement voisin ou égal à : γ = arctg (L/2R).

Lorsque R (qui correspond typiquement à la distance de l'axe du ressort (en position neutre, sans rotation) à l'axe de rotation du dispositif) est élevé, la valeur de L/2R est relativement faible, et donc la valeur de arctg (L/2R) également, ce qui signifie que α + µ, et donc les angles α et µ doivent être relativement faibles. On en déduit que les angles d'ouverture du siège (α) et des logements (α + µ), par rapport à l'axe du ressort doivent alors être relativement faibles. Ceci traduit l'effet technique selon lequel lorsque le ressort est éloigné de l'axe de rotation, les angles d'ouverture des sièges et des logements doivent être relativement fermés (faibles) pour retenir les sièges dans leurs logements à haut régime moteur.

Inversement, lorsque le ressort est relativement proche de l'axe de rotation, la force centrifuge exercée sur lui est moindre, et les angles d'ouverture des sièges et logements les mieux adaptés à une telle configuration se révèlent pouvoir être plus grands.

La relation entre γ, δ, L et R définit donc une plage de dimensionnements optimum, pour éviter tant l'éjection des ressorts que les chocs sièges/logements.
De préférence, l'angle γ appartient à l'intervalle [arctg(L/2R) - δ/12, arctg(L/2R) + 0,5 δ].
Avantageusement, on pourra aussi choisir γ dans l'intervalle [arctg(L/2R) - 4°, arctg(L/2R) + 20°], ou dans l'intervalle [arctg (L/2R) - 3°, arctg (L/2R) + 15°], ou de façon préférée dans l'intervalle [arctg (L/2R) - 2°, arctg (L/2R) + 10°], ou même dans l'intervalle [arctg (L/2R) -1°, arctg (L/2R) + 5°].

Avantageusement, l'angle γ propre à chacun des logements associés à la saillie du premier siège, et de préférence à chacun des logements associés à la saillie de l'un quelconque des deux sièges appartient à l'intervalle :[α + 0,375 δ, α + δ], et de préférence à l'intervalle [α + 0,44 δ, α + 0,80 δ].

De préférence, l'angle γ propre à chacun des logements associés à la saillie du premier siège, et de préférence à chacun des logements associés à la saillie de l'un quelconque des deux sièges est sensiblement égal à α + 0,5 δ.

Ainsi, chacun des logements de chacun des sièges est adapté à ce siège, du point de vue de son ouverture angulaire.

Les surfaces de portée complémentaires des deux logements de pivotement associés à la saillie d'un siège ont avantageusement la même configuration, c'est à dire ont des sections comprenant un même deuxième arc de cercle dont les tangentes aux extrémités forment le même angle γ vérifiant la relation précitée. Les deux surfaces de portée complémentaires peuvent cependant avoir des géométries légèrement différentes, se traduisant par des angles γ et µ différents pour les deux logements associés à la même saillie d'un siège, la relation angulaire précitée étant vérifiée pour chacun des deux logements.

De même, les deux sièges ont généralement des géométries identiques, avec des angles α identiques. Toutefois, sans sortir du cadre de l'invention, chaque siège, avec ses logements de pivotement associés peut avoir une géométrie différente de celle de l'autre siège, chaque siège, avec son angle d'ouverture propre α et les angles d'ouverture (γ = α + µ) de ses logements associés vérifiant la relation précitée.

De préférence, l'angle α est identique pour chacun des deux sièges, et l'angle γ propre à chaque logement est identique pour chacun des logements. Il n'y a donc dans ce cas plus qu'un angle α unique, et un angle γ = α + µ unique, et donc également un angle µ unique pour les deux sièges et l'ensemble des logements associés.

Avantageusement, la section de la surface de portée de la saillie comprend le premier arc de cercle prolongé par un segment tangentiel à chacune de ses extrémités, et la section de la surface de portée complémentaire de chaque logement de pivotement associé à la saillie comprend le deuxième arc de cercle prolongé par un segment tangentiel à chacune de ses extrémités.

La partie dorsale d'au moins un siège (et de préférence des deux sièges) comprend avantageusement une face dorsale plane radialement externe, en vis-vis circonférentiel avec une face appariée plane radialement externe de chacun des deux éléments coaxiaux, ces faces appariées planes radialement externes étant configurées pour ne pas s'opposer à un pivotement par rotation du siège d'un angle au moins égal à µ, et de préférence au moins égal à 1,5 µ, et de préférence au moins égal à 2 µ.

Ainsi, les logements de pivotement et la configuration relative siège/élément axial permettent un débattement angulaire important du siège, s'opposant à des chocs directs entre siège et élément axial, même dans des cas de fonctionnement particuliers, voire extrêmes.

Le terme « radialement externe » signifie: disposé radialement vers l'extérieur par rapport au plan passant par les axes de pivotement des deux saillies.

Typiquement, la face dorsale plane radialement externe forme avec chacune des faces appariées planes radialement externes un angle β au moins égal à 1,5 µ, et de préférence au moins égal à 2 µ.

De façon préférée, le centre commun des premier et deuxième arcs de cercle est décalé circonférentiellement vers l'extérieur du ressort par rapport au plan de la face dorsale plane radialement externe d'une valeur d1, par exemple comprise entre 1 mm (millimètre) et 6 mm.

Dans la pratique, le premier et le second arc de cercle peuvent avoir des centres très légèrement différents, par exemple distants entre eux de au plus 0,3 mm et de préférence d'au plus 0,2 mm. Il peut y avoir également une tolérance, par exemple d'au plus 0,3 mm et de préférence d'au plus 0,2 mm entre les rayons de ces arcs de cercle, le rayon du premier arc de cercle (correspondant au siège) étant alors de préférence légèrement plus petit que le rayon du second arc de cercle. (correspondant à un logement).

Typiquement, la plus petite distance d2 de la face dorsale plane radialement externe du siège à une partie d'un élément coaxial en vis-à-vis circonférentiel avec cette face dorsale plane est comprise entre 0,2 mm et d1/2.

Typiquement, chaque élément coaxial comprend deux bords, chacun étant en vis-à-vis circonférentiel avec une partie radialement externe d'un siège, configurés pour que chacun des deux sièges puisse pivoter d'un angle au moins égal à µ, le pivotement d'un siège étant de sens opposé par rapport à celui de l'autre siège, pour permettre un cintrage du ressort avec déplacement radial vers l'extérieur d'une partie centrale de ce ressort sous l'effet de forces centrifuges.

Chacun des sièges est en général réalisé en acier, typiquement moulé, ou en matériau plastique, de préférence par moulage, et comprend de préférence un évidement central disposé dans sa partie frontale.

La longueur axiale de la saillie est généralement sensiblement égale à la distance entre deux faces externes appartenant respectivement à l'un et à l'autre des deux éléments coaxiaux.

En général, un dispositif d'amortissement de torsion selon l'invention comprend une pluralité de ressorts à effet circonférentiel, par exemple de 4 à 6 ressorts d'un type donné, répartis circonférentiellement. Généralement chaque paire de siège assure le positionnement de plusieurs ressorts, par exemple deux ou trois ressorts imbriqués l'un dans l'autre, de diamètres de spires différents. Le dispositif peut également comprendre des ressorts adaptés à un amortissement à fort couple de torsion, et d'autres ressorts adaptés à un amortissement à faible couple de torsion. Avantageusement, les sièges de ces divers ressorts et leurs logement associés vérifient chacun la relation précitée.

L'invention concerne également une friction d'embrayage pour véhicule automobile, comprenant le dispositif d'amortissement de torsion précité.

L'invention concerne aussi un double volant amortisseur pour véhicule automobile, comprenant un volant solidaire d'un arbre menant et un volant solidaire d'un arbre mené, dans lequel ces deux volants sont les deux éléments coaxiaux du dispositif d'amortissement de torsion précité.

De façon générale chacun des éléments coaxiaux peut comprendre un élément unique, venu de matière à partir d'une tôle, mais également plusieurs éléments solidaires entre eux. Un élément coaxial peut notamment comprendre deux parties radiales comprenant chacune un disque, solidaires entre elles, parfois appelés « rondelles de guidage », disposés de part et d'autre de l'autre élément coaxial, parfois appelé « voile ». Cet ensemble peut appartenir typiquement à une friction, ou à un double volant amortisseur.

Le dispositif peut également comprendre plus de deux éléments coaxiaux, montés rotatifs autour d'un même axe, par exemple trois, quatre éléments ou plus.

L'invention concerne enfin un embrayage pour véhicule automobile, simple, double, ou multiple, comprenant au moins un dispositif d'amortissement de torsion tel que précité.

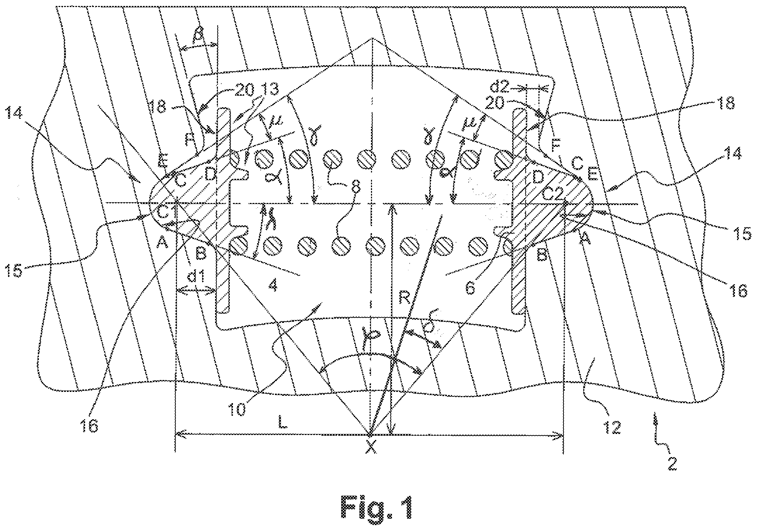

L'invention sera mieux comprise à la lecture de la description qui va suivre, donnée uniquement à titre d'exemple et faite en se référant au dessin de la figure 1, qui représente une vue axiale partielle d'un dispositif d'amortissement de torsion selon l'invention, représenté à l'arrêt.

On a donc représenté sur la figure 1 une partie d'un dispositif d'amortissement de torsion 2 d'un double volant amortisseur, représenté monté en position sans sollicitations de vitesse de rotation ni de couple, comprenant deux sièges 4 et 6, pour le positionnement et le centrage d'un ressort 8 à action circonférentielle, typiquement spiralé. Le ressort 8 et les deux sièges 4 et 6 sont disposés dans une fenêtre 10 d'un premier élément coaxial 12, soit une rondelle de guidage formant l'un de deux volants amortisseurs associés. Ce ressort et ces deux sièges sont également disposés dans une deuxième fenêtre appartenant au deuxième élément coaxial, formant le deuxième volant amortisseur. Cette deuxième fenêtre est éventuellement de même géométrie que la première fenêtre, et n'est pas représentée sur la figure 1, de même que le deuxième élément coaxial, typiquement disposé derrière le premier élément coaxial 12.

Chaque siège 4, 6 comprend une partie frontale 13 de positionnement et de centrage du ressort 8, et une partie dorsale comprenant une saillie axiale 14 délimitée par une portion de cylindre de section circulaire dont la section forme un premier arc de cercle 15 entre les points A et C.. Chaque extrémité A, C du premier arc de cercle d'un siège est prolongée tangentiellement par un segment tangentiel, respectivement AB et CD, ces deux segments tangentiels, appartenant à la section de la surface de portée de la saillie.

La saillie de pivotement est donc délimitée par une surface de portée en partie formée par une portion de cylindre de section circulaire, et en partie formée par des parties planes, dont la section est représentée par le profil DCAB, destinée à venir en contact avec une partie correspondante d'une surface de portée complémentaire de chaque logement de pivotement associé à la saillie. Cette surface de portée complémentaire est représentée sur la figure 1 par sa section, selon le profil FEAB, qui comprend un deuxième arc de cercle 16, entre les points géométriques A et E, de même courbure que le premier arc de cercle et en partie sensiblement confondu avec ce premier arc de cercle, prolongé tangentiellement à ses extrémités A et E par les segments tangentiels AB et EF.

L'axe du ressort (spiralé) 8 est en fait, et conventionnellement, la droite joignant les centres C1 et C2 des premiers arcs de cercles correspondant aux deux sièges.

La tangente à l'extrémité radialement externe C de chaque premier arc de cercle (pour chaque siège) forme un angle α avec l'axe du ressort.

L'autre tangente, à l'extrémité radialement interne A de chaque premier arc de cercle (pour chaque siège) forme un angle λ avec l'axe du ressort. Généralement, les angles α et λ sont égaux, la saillie étant disposée de façon équirépartie de part et d'autre de l'axe joignant les centres C1 et C2 des premiers arcs de cercle de chaque siège (ou axe du ressort 8).

L'angle d'ouverture γ du logement ménagé dans le premier élément coaxial 12, pour recevoir la saillie de pivotement, par rapport à l'axe du ressort 8 est cependant plus grand d'un angle µ que l'angle d'ouverture α de la saillie : γ = α + µ.

L'angle µ autorise donc un débattement angulaire de la saillie de pivotement du siège dans le logement de pivotement associé. Les axes de pivotement des saillies des deux sièges passent respectivement par les centres C1 et C2.

La partie dorsale de chaque siège comprend également une face dorsale radialement externe 18, en vis-à-vis circonférentiel avec une face appariée radialement externe 20, typiquement de chacun des deux éléments coaxiaux 12, ces faces appariées radialement externes étant configurées pour ne pas s'opposer à une rotation du siège d'un angle au moins égal à µ, de préférence au moins égal à 1,5 µ, et de façon très préférée au moins égal à 2 µ.

La face dorsale radialement externe 18, et la face appariée radialement externe 20 forment un angle β au moins égal à µ, et de préférence au moins égal à 1,5 µ, et de préférence au moins égal à 2 µ avec la face dorsale plane radialement externe du siège, pour permettre le pivotement de ce siège, avec un débattement angulaire β procurant une marge de sécurité pour des fonctionnements particuliers atypiques. L'angle β entre les deux faces planes 18 et 20 appariées est donc avantageusement notablement supérieur ou égal à µ, de préférence au moins égal à 1,5 µ, et de façon très préférée au moins égal à 2 µ. On a pu constater que de telles valeurs de débattement angulaire permettaient d'éviter les chocs du siège avec les bords latéraux de la fenêtre 10.

Le logement de pivotement est la partie de la surface du premier élément coaxial 12 disposée en vis-à-vis de la saillie 14, dont la section comprend le deuxième arc de cercle 16, AE, et les segments tangentiels d'extrémité AB et EF. Il correspond au contour BAEF.

Le centre commun, respectivement C1, C2 de chaque premier 15 et deuxième 16 arc de cercle d'une saillie 14 d'un siège, respectivement 4 et 6, est avantageusement excentré d'une valeur d1 par rapport à la face plane 20, vers l'extérieur du ressort.

Pour permettre le pivotement du siège 4, 6, la plus petite distance d2 de la face dorsale plane radialement externe 18 à une partie de l'élément coaxial 12 en vis-à-vis circonférentiel avec cette face dorsale plane 18 est non nulle, et typiquement comprise entre 0,2 mm et d1/2.

Chaque élément coaxial 12 comprend deux bords (radialement au delà du point F sur la figure 1), chacun étant en vis-à-vis circonférentiel avec un siège 4, 6, ces bords étant configurés pour que chacun des deux sièges 4, 6 puisse pivoter d'un angle au moins égal à µ, le pivotement d'un siège étant de sens opposé par rapport à celui de l'autre siège pour permettre un cintrage du ressort 8 avec déplacement radial vers l'extérieur d'une partie centrale de ce ressort sous l'effet de forces centrifuges.

Les surfaces appariées radialement externes de chacun des deux éléments coaxiaux sont donc configurées pour que chacun des sièges puisse pivoter d'un angle au moins égal à µ, le pivotement de chacun des deux sièges étant de sens opposé et permettant un cintrage du ressort 8 avec déplacement radial vers l'extérieur d'une partie centrale de ce ressort 8 sous l'effet de forces centrifuges.

Au repos, c'est à dire sans sollicitations de vitesse de rotation ni de couple, la partie radialement interne de la surface de portée du siège est sensiblement en contact avec la surface de portée complémentaire du logement, en particulier au niveau du segment AB. Ceci n'est cependant pas obligatoire, le logement pouvant aussi avoir un angle d'ouverture, en partie radialement interne, supérieur à celui du siège. Il en est éventuellement de même pour deux faces planes radialement internes appariées appartenant respectivement au siège et au premier élément coaxial (typiquement à chaque élément coaxial), mais ne faisant pas partie de la saillie de pivotement ni du siège de pivotement, par exemple des faces sensiblement radiales situées dans le plan de la face radialement externe 18 du siège. On peut toutefois avantageusement, entre une telle face plane radialement interne du siège et une telle face plane appariée radialement interne de chaque élément coaxial, qui ne sont pas des surfaces de portée, prévoir un jeu minimum.

Lorsque le dispositif d'amortissement est monté sans sollicitations de vitesse de rotation ni de couple, l'angle (aigu) d'ouverture du dispositif d'amortissement, est formé par les droites XC1 et XC2. Ces droites joignent le point X de l'axe de rotation (disposé à la distance R du plan passant par les deux axes parallèles passant par les centres C1 et C2, distants entre eux de la longueur L) respectivement aux centres C1, C2, est représenté par la référence ϕ sur la figure 1.

Lorsque le dispositif d'amortissement est monté avec une sollicitation de rotation importante, l'effet des forces centrifuges s'exerce sur les sièges 4, 6 et le ressort 8, dont la partie centrale commence à s'excentrer et les deux sièges tendent à pivoter de façon antagoniste (dans des sens opposés). Par ailleurs, du fait des couples de torsion exercés en régime dynamique sur les deux éléments coaxiaux, et compte tenu de leur inertie propre, le ressort est amené à se comprimer, le débattement angulaire de l'amortisseur se réduisant. L'amortisseur retransmet alors de façon amortie le couple exercé sur l'un des éléments coaxiaux vers l'autre élément coaxial. A haut couple différentiel exercé sur les éléments coaxiaux, l'angle d'ouverture du dispositif d'amortissement se réduit fortement, jusqu'à ce que le dispositif d'amortissement se trouve en butée (butée physique entre siège(s) et logement(s), ou ressort 8 comprimé jusqu'au point où les spires deviennent jointives). Sur la figure 1, on a supposé que le siège de gauche restait fixe, et que le siège de droite se rapprochait du siège de gauche, l'angle ϕ d'ouverture du dispositif se réduisant d'un angle δ désignant l'angle maximum de débattement du dispositif d'amortissement. A cet angle maximum de débattement, la droite XC2 a pivoté de l'angle δ, et l'angle d'ouverture du dispositif d'amortissement se trouve réduit et égal à ϕ - δ. Parallèlement, les deux sièges pivotent l'un par rapport à l'autre.

On a trouvé que lorsque le dispositif est conçu de façon à ce que l'angle γ a une valeur appartenant à l'intervalle :[arctg(L/2R) - δ/8, arctg(L/2R) + δ], les sièges ne sortent pas de leurs logements, et les chocs entre sièges et logement sont faibles ou nuls. Plus l'angle γ est proche de arctg (L/2R), et plus élevée est la vitesse de rotation du dispositif (et corrélativement le régime moteur, typiquement identique s'il n'y a pas de dispositif de démultiplication) utilisable sans risques d'éviction des sièges hors de leurs logements, et de chocs sièges/logements. On a trouvé également qu'il était souhaitable que l'angle γ appartienne à l'intervalle :[α + 0,375 δ, α + δ], et soit avantageusement le plus près possible de la valeur α + 0,5 δ.

L'homme du métier pourra, sans sortir du cadre de l'invention, mettre en oeuvre cette invention selon des modes de réalisation différents de celui décrit ci-dessus, et pourra par exemple utiliser toute caractéristique technique connue de l'état de la technique, compatible avec l'invention. L'invention est définie par les revendications suivantes.

## Revendications

1. Dispositif (2) d'amortissement de torsion du type comprenant deux éléments coaxiaux (12) montés rotatifs l'un par rapport à l'autre autour d'un axe de rotation, à l'encontre d'au moins un ressort (8) intervenant circonférentiellement entre eux, et deux sièges (4, 6) de positionnement d'extrémités de ce ressort (8);
dispositif dans lequel:
pour chaque siège (4, 6), sans sollicitations de vitesse de rotation ni de couple :
- ce siège comprend une partie frontale (13) d'appui et/ou de centrage d'une extrémité du ressort (8), et une partie dorsale comportant une saillie axiale de pivotement (14), apte à pivoter autour d'un axe de pivotement parallèle à l'axe de rotation, dans deux logements de pivotement associés à cette saillie (14), ménagés respectivement dans l'un et à l'autre des deux éléments coaxiaux (12) ;
- la saillie axiale de pivotement (14) est délimitée par une surface de portée en partie formée par une portion de cylindre de section circulaire, destinée à venir en contact avec une partie correspondante d'une surface de portée complémentaire de chaque logement de pivotement associé à la saillie (14) ;
- la section de la portion de cylindre est formée par un premier arc de cercle (15, AC) dont une tangente à une extrémité radialement extérieure (C) de cet arc (15, AC) forme avec un axe (8) du ressort un angle aigu de valeur α propre à ce siège (4, 6) ;
- la section de la partie correspondante de la surface de portée complémentaire de chaque logement est formée par un deuxième arc de cercle (16, AE), propre à ce logement, sensiblement de même centre et de rayon de courbure sensiblement identique à celui du premier arc de cercle (15), dont une tangente à une extrémité radialement extérieure (E) de cet arc forme avec l'axe (8) du ressort un angle aigu γ propre à ce logement, et supérieur à α, avec γ = α + µ;
dispositif dans lequel, sans sollicitations de vitesse de rotation ni de couple:
les axes de pivotement correspondant aux saillies (14) des deux sièges (4, 6) passent chacun par le centre (C1, C2) d'un premier arc de cercle, sont sensiblement équidistants de l'axe de rotation, parallèles entre eux à une distance L entre eux, et compris dans un plan situé à une distance R de l'axe de rotation ;
**caractérisé en ce que** pour au moins l'un des deux sièges (4, 6), dit premier siège, l'angle γ propre à chaque logement associé à la saillie de ce premier siège appartient à l'intervalle : [arctg(L/2R) - δ/8, arctg(L/2R) + δ], de préférence à l'intervalle [arctg(L/2R) - δ/12, arctg(L/2R) + 0,5 δ], et de façon très préférée est sensiblement égal à arctg(L/2R), dans lequel δ représente l'angle maximum de débattement du dispositif d'amortissement, entre une position sans sollicitations de vitesse de rotation ni de couple et une position en butée sous l'effet d'un couple total transmis par le moteur.

2. Dispositif selon la revendication 1, dans lequel l'angle γ propre à chacun des logements associés à la saillie du premier siège, et de préférence à chacun des logements associés à la saillie de l'un quelconque des deux sièges appartient à l'intervalle :[α + 0,375 δ, α + δ], et de préférence à l'intervalle [α + 0,44 δ, α + 0,80 δ].

3. Dispositif selon l'une des revendications 1 ou 2, dans lequel l'angle γ propre à chacun des logements associés à la saillie du premier siège, et de préférence à chacun des logements associés à la saillie de l'un quelconque des deux sièges est sensiblement égal à α + 0,5 δ.

4. Dispositif selon l'une quelconque des revendications 1 à 3, dans lequel pour chacun des deux sièges (4, 6), l'angle γ propre à chaque logement associé à la saillie de ce siège appartient à l'intervalle :[arctg(L/2R) - δ/8, arctg(L/2R) + δ], de préférence à l'intervalle [arctg(L/2R) - δ/12, arctg(L/2R) + 0,5 δ], et de façon très préférée est sensiblement égal à arctg(L/2R).

5. Dispositif selon l'une quelconque des revendications 1 à 4, dans lequel l'angle α est identique pour chacun des deux sièges (4, 6), et l'angle γ propre à chaque logement est identique pour chacun des logements et chacun des sièges.

6. Dispositif selon l'une quelconques des revendications 1 à 5, dans lequel la partie dorsale d'au moins le premier siège comprend une face dorsale plane (18) radialement externe, en vis-vis circonférentiel avec une face appariée plane (20) radialement externe de chacun des deux éléments coaxiaux (12), ces faces appariées planes (20) radialement externes étant configurées pour ne pas s'opposer à une rotation du siège d'un angle au moins égal à µ = γ - α, de préférence au moins égal à 1,5 µ, et de façon très préférée au moins égal à 2 µ.

7. Dispositif selon la revendication 6, dans lequel la face dorsale plane (18) radialement externe forme avec chacune des faces appariées planes (20) radialement externes un angle β au moins égal à 1,5 µ, et de préférence au moins égal à 2 µ.

8. Dispositif selon l'une des revendications 6 ou 7, dans lequel le centre (C1, C2) du premier (15) arc de cercle est décalé circonférentiellement vers l'extérieur du ressort par rapport au plan de la face dorsale plane (18) radialement externe, d'une valeur d1.

9. Dispositif selon la revendication 8, dans lequel la plus petite distance (d2) de la face dorsale plane (18) radialement externe du siège à une partie d'un élément coaxial (12) en vis-à-vis circonférentiel avec cette face dorsale plane (18) est comprise entre 0,2 mm et d1/2.

10. Dispositif selon l'une quelconque des revendications 6 à 9, dans lequel chaque élément coaxial (12) comprend deux bords, chacun étant en vis-à-vis circonférentiel avec une partie radialement externe d'un siège (4, 6), configurés pour que chacun des deux sièges (4, 6) puisse pivoter d'un angle au moins égal à µ, le pivotement d'un siège étant de sens opposé par rapport à celui de l'autre siège, pour permettre un cintrage du ressort (8) avec déplacement radial vers l'extérieur d'une partie centrale de ce ressort sous l'effet de forces centrifuges.

11. Dispositif selon l'une quelconque des revendications 1 à 10, dans lequel chacun des sièges (4, 6) est réalisé en acier ou en matériau plastique, de préférence par moulage, et comprend de préférence un évidement central disposé dans sa partie frontale.

12. Dispositif selon l'une quelconque des revendications 1 à 11, dans lequel la longueur axiale de la saillie (14) est sensiblement égale à la distance entre deux faces radiales externes appartenant respectivement à l'un et à l'autre des deux éléments coaxiaux.

13. Friction d'embrayage pour véhicule automobile, comprenant un dispositif d'amortissement de torsion, **caractérisée en ce que** ce dispositif est selon l'une des revendications 1 à 12.

14. Double volant amortisseur pour véhicule automobile, comprenant un volant solidaire d'un arbre menant et un volant solidaire d'un arbre mené, **caractérisé en ce que** ces deux volants sont les deux éléments coaxiaux d'un dispositif selon l'une des revendications 1 à 12.

15. Embrayage pour véhicule automobile, comprenant un dispositif d'amortissement de torsion, **caractérisé en ce que** ce dispositif d'amortissement de torsion est selon l'une des revendications 1 à 12.

## Patentansprüche

1. Torsionsdämpfende Vorrichtung (2) des Typs, der zwei koaxiale Elemente (12) umfasst, die zueinander um eine Rotationsachse gegen mindestens eine Feder (8) montiert sind, die umfänglich zwischen ihnen eingreift, und zwei Sitze (4, 6) zum Positionieren von Enden dieser Feder (8), Vorrichtung bei der:
für jeden Sitz (4, 6) ohne Rotationsgeschwindigkeitsbeanspruchungen und ohne Drehmoment:
- dieser Sitz einen frontalen Teil (13) zum Aufliegen und/oder Zentrieren eines Endes der Feder (8) umfasst, und einen Rückenteil, der einen axialen Schwenkvorsprung (14) umfasst, der geeignet ist, um um eine Schwenkachse parallel zu der Rotationsachse in zwei Schwenkaufnahmen, die mit diesem Vorsprung (14) assoziiert sind, die jeweils in dem einem und an dem anderen dieser zwei koaxialen Elemente (12) angelegt sind, zu schwenken,
- der axiale Schwenkvorsprung (14) durch eine Auflageoberfläche begrenzt ist, die zum Teil durch einen Zylinderabschnitt mit Kreisquerschnitt gebildet ist, der dazu bestimmt ist, mit einem entsprechenden Teil einer ergänzenden Auflageoberfläche jeder Schwenkaufnahme, die mit dem Vorsprung (14) assoziiert ist, in Berührung zu kommen,
- der Querschnitt des zylindrischen Abschnitts durch einen ersten Kreisbogen (15, AC) gebildet ist, von dem eine Tangente an einem radial äußeren Ende (C) dieses Bogens (15, AC) mit einer Achse (8) der Feder einen spitzen Winkel mit Wert α, der diesem Sitz (4, 6) eigen ist, bildet,
- der Querschnitt des entsprechenden Teils der komplementären Auflageoberfläche jeder Aufnahme durch einen zweiten Kreisbogen (16, AE) gebildet ist, der dieser Aufnahme eigen ist, mit im Wesentlichen derselben Mitte und mit im Wesentlichen identischem Krümmungsradius wie der des ersten Kreisbogens (15), von dem eine Tangente an einem radial äußeren Ende (E) dieses Kreisbogens mit der Achse (8) der Feder einen spitzen Winkel γ bildet, der dieser Aufnahme eigen und größer als α ist, wobei γ = α + µ,
Vorrichtung, bei der ohne Drehzahlbeanspruchungen und ohne Drehmoment:
die Schwenkachsen, die den Vorsprüngen (14) der zwei Sitze (4, 6) entsprechen, jeweils durch die Mitte (C1, C2) eines ersten Kreisbogens verlaufen, im Wesentlichen von der Rotationsachse gleich beabstandet, zueinander in einer Entfernung L parallel und in einer Ebene enthalten sind, die in einer Entfernung R von der Rotationsachse liegt,
**dadurch gekennzeichnet, dass** für mindestens einen der zwei Sitze (4, 6), erster Sitz genannt, der Winkel γ, der jeder Aufnahme eigen ist, die mit dem Vorsprung dieses ersten Sitzes assoziiert ist, zu dem Bereich [arctg(L/2R) - δ/8, arctg(L/2R) + δ] gehört, bevorzugt zu dem Bereich [arctg(L/2R)-δ/12, arctg(L/2R) + 0,5 δ], und besonders bevorzugt im Wesentlichen gleich arctg(L/2R) ist, wobei δ den maximalen Ausschlagwinkel der Dämpfvorrichtung zwischen einer Position ohne Drehzahlbeanspruchungen und ohne Drehmoment und
einer Anschlagposition unter der Wirkung eines Gesamtdrehmoments, das von den Motor übertragen wird, darstellt.

2. Vorrichtung nach Anspruch 1, wobei der Winkel γ, der jeder der Aufnahmen, die mit dem Vorsprung des ersten Sitzes assoziiert sind, eigen ist, und vorzugsweise mit jeder der Aufnahmen, die mit dem Vorsprung eines beliebigen der zwei Sitze assoziiert ist, zu dem Bereich: [α + 0,375 δ, α + δ] gehört und bevorzugt zu dem Bereich [α + 0,44 δ, α + 0,80 δ].

3. Vorrichtung nach einem der Ansprüche 1 oder 2, wobei der Winkel γ, der jeder der Aufnahmen, die mit dem Vorsprung des ersten Sitzes assoziiert sind, eigen ist und vorzugsweise mit jeder der Aufnahmen, die mit dem Vorsprung eines beliebigen der zwei Sitze assoziiert sind, im Wesentlichen gleich α + 0,5 δ ist.

4. Vorrichtung nach einem der Ansprüche 1 bis 3, wobei für jeden der zwei Sitze (4, 6) der Winkel γ, der jeder Aufnahme eigen ist, die mit dem Vorsprung dieses Sitzes assoziiert ist, zu dem Bereich [arctg(L/2R) - δ/8, arctg(L/2R)+δ] gehört, bevorzugt zu dem Bereich [arctg(L/2R) - δ/12, arctg(L/2R) + 0,5 δ] und besonders bevorzugt im Wesentlichen gleich arctg(L/2R) ist.

5. Vorrichtung nach einem der Ansprüche 1 bis 4, wobei der Winkel δ für jeden der zwei Sitze (4, 6) identisch ist, und der Winkel γ, der jeder der Aufnahmen eigen ist, für jede der Aufnahmen und jeden der Sitze identisch ist.

6. Vorrichtung nach einem der Ansprüche 1 bis 5, wobei der Rückenteil mindestens des ersten Sitzes eine radial äußere flache Rückenseite (18) umfänglich gegenüber einer gepaarten radial äußeren flachen Seite (20) jedes der zwei koaxialen Elemente (12) umfasst, wobei diese radial äußeren gepaarten Seiten (20) konfiguriert sind, um sich keiner Drehung des Sitzes um einen Winkel mindestens gleich µ = y - α zu widersetzen, bevorzugt mindestens gleich 1,5 µ und besonders bevorzugt mindestens gleich 2 µ.

7. Vorrichtung nach Anspruch 6, wobei die radial äußere flache Rückenseite (18) mit jeder der radial äußeren gepaarten flachen Seiten (20) einen Winkel β mindestens gleich 1,5 µ und bevorzugt mindestens gleich 2 µ bildet.

8. Vorrichtung nach einem der Ansprüche 6 oder 7, wobei die Mitte (C1, C2) des ersten (15) Kreisbogens umfänglich nach außerhalb der Feder in Bezug zu der Ebene der radial äußeren flachen Rückenseite (18) um einen Wert d1 versetzt ist.

9. Vorrichtung nach Anspruch 8, wobei die kleinste Entfernung (d2) der radial äußeren flachen Rückenseite (18) des Sitzes an einem Teil eines koaxialen Elements (12) in umfänglicher Gegenüberlage mit dieser flachen Rückenseite (18) zwischen 0,2 mm und d1/2 liegt.

10. Vorrichtung nach einem der Ansprüche 6 bis 9, wobei jedes koaxiale Element (12) zwei Ränder umfasst, wobei jeder umfänglich einem radial äußeren Teil eines Sitzes (4, 6) gegenüber liegt, die ausgebildet sind, damit jeder der zwei Sitze (4, 6) um einen Winkel mindestens gleich µ schwenken kann, wobei das Schwenken eines Sitzes in die umgekehrte Richtung in Bezug zu der des anderen Sitzes liegt, um ein Biegen der Feder (8) mit radialer Verlagerung nach außen eines zentralen Teils dieser Feder unter der Einwirkung von Zentrifugalkräften zu erlauben.

11. Vorrichtung nach einem der Ansprüche 1 bis 10, wobei jeder der Sitze (4, 6) aus Stahl oder aus Kunststoff hergestellt ist, bevorzugt durch Formen, und bevorzugt eine zentrale Aussparung umfasst, die in seinem frontalen Teil angeordnet ist.

12. Vorrichtung nach einem der Ansprüche 1 bis 11, wobei die axiale Länge des Vorsprungs (14) im Wesentlichen gleich der Entfernung zwischen zwei radial äußeren Seiten ist, die jeweils zu dem einen und dem anderen der zwei koaxialen Elemente gehören.

13. Kupplungsreibung für Kraftfahrzeug, die eine Torsionsdämpfvorrichtung umfasst, **dadurch gekennzeichnet, dass** diese Vorrichtung einem der Ansprüche 1 bis 12 entspricht.

14. Doppeltes Dämpfungsschwungrad für Kraftfahrzeug, das ein Schwungrad umfasst, das fest mit einer Antriebswelle verbunden ist, und ein Schwungrad, das fest mit einer Abtriebswelle verbunden ist, **dadurch gekennzeichnet, dass** diese zwei Schwungräder die zwei koaxialen Elemente einer Vorrichtung nach einem der Ansprüche 1 bis 12 sind.

15. Kupplung für Kraftfahrzeug, die eine Torsionsdämpfvorrichtung umfasst, **dadurch gekennzeichnet, dass** diese Torsionsdämpfvorrichtung einem der Ansprüche 1 bis 12 entspricht.

## Claims

1. Torsion damping device (2) of the type comprising two coaxial elements (12) mounted with the ability to rotate one with respect to the other about an axis of rotation against the action of at least one spring (8) acting circumferentially between them, and two seats (4, 6) for positioning ends of this spring (8);
in which device:
for each seat (4, 6), free of the influence of rotational speed or torque:
- this seat comprises a frontal part (13) for supporting and/or centring one end of the spring (8), and a dorsal part comprising an axial pivot projection (14), able to pivot about an axis of pivoting parallel to the axis of rotation, in two pivot housings associated with this projection (14) and formed respectively one in each of the two coaxial elements (12);
- the axial pivot projection (14) is delimited by a bearing surface in part formed of a portion of a cylinder of circular cross section which is intended to come into contact with a corresponding part of a complementary bearing surface belonging to each pivot housing associated with the projection (14);
- the cross section of the portion of a cylinder is formed by a first arc of a circle (15, AC) of which a tangent to a radially outer end (C) of this arc (15, AC) forms, with an axis (8) of the spring, an acute angle of value α specific to this seat (4, 6);
- the cross section of the corresponding part of the complementary bearing surface of each housing is formed by a second arc of a circle (16, AE), specific to this housing, having substantially the same centre and a radius of curvature substantially identical to that of the first arc of a circle (15), of which a tangent to a radially outer end (E) of this arc forms, with the axis (8) of the spring, an acute angle γ specific to this housing and greater than α, with γ = α + µ;
in which device, when free of the influence of rotational speed and of torque:
the axes of pivoting corresponding to the projections (14) of the two seats (4, 6) each pass through the centre (C1, C2) of a first arc of a circle, are substantially equidistant from the axis of rotation, are mutually parallel at a distance L apart, and are contained in a plane situated at a distance R from the axis of rotation;
**characterized in that** for at least one of the two seats (4, 6), referred to as the first seat, the angle γ specific to each housing associated with the projection of this first seat is contained within the interval: [arctan(L/2R) - δ/8, arctan(L/2R) + δ], preferably within the interval [arctan(L/2R) - δ/12, arctan(L/2R) + 0.5 δ] and highly preferably is substantially equal to arctan(L/2R), in which δ represents the maximum angular excursion of the damping device, between a position free of the influence of rotational speed or torque and a position in abutment under the effect of a total torque transmitted by the engine.

2. Device according to Claim 1, in which the angle γ specific to each of the housings associated with the projection of the first seat, and preferably to each of the housings associated with the projection of any one of the two seats are contained within the interval: [α + 0.375 δ, α + δ] and preferably within the interval [α + 0.44 δ, α + 0.80 δ].

3. Device according to one of Claims 1 and 2, in which the angle γ specific to each of the housings associated with the projection of the first seat, and preferably to each of the housings associated with the projection of any one of the two seats is substantially equal to α + 0.5 δ.

4. Device according to any one of Claims 1 to 3, in which, for each of the two seats (4, 6), the angle γ specific to each housing associated with the projection of this seat is contained within the interval: [arctan(L/2R) - δ/8, arctan(L/2R) + δ], preferably within the interval [arctan(L/2R) - δ/12, arctan(L/2R) + 0.5 δ], and highly preferably is substantially equal to arctan (L/2R) .

5. Device according to any one of Claims 1 to 4, in which the angle α is identical for each of the two seats (4, 6), and the angle γ specific to each housing is identical for each of the housings and each of the seats.

6. Device according to any one of Claims 1 to 5, in which the dorsal part of at least the first seat comprises a radially external planar dorsal face (18) circumferentially facing a radially external planar matched face (20) of each of the two coaxial elements (12), these radially external planar matched faces (20) being configured so as not to oppose a rotation of the seat by an angle at least equal to µ = γ - α, preferably at least equal to 1.5 µ and highly preferably at least equal to 2 µ.

7. Device according to Claim 6, in which the radially external planar dorsal face (18) forms, with each of the radially external planar matched faces (20), an angle β at least equal to 1.5 µ and preferably at least equal to 2 µ.

8. Device according to one of Claims 6 and 7, in which the centre (C1, C2) of the first (15) arc of a circle is offset circumferentially towards the outside of the spring with respect to the plane of the radially external planar dorsal face (18) by an amount d1.

9. Device according to Claim 8, in which the shortest distance (d2) from the radially external planar dorsal face (18) of the seat to a part of a coaxial element (12) circumferentially facing this planar dorsal face (18) is between 0.2 mm and d1/2.

10. Device according to any one of Claims 6 to 9, in which each coaxial element (12) comprises two edges, each circumferentially facing a radially external part of a seat (4, 6), configured so that each of the two seats (4, 6) can pivot by an angle at least equal to µ, the pivoting of one seat being in the opposite direction with respect to that of the other seat, so as to allow the spring (8) to bow with a central part of this spring moving radially outwards under the effect of centrifugal forces.

11. Device according to any one of Claims 1 to 10, in which each of the seats (4, 6) is made of steel or of plastic, preferably by moulding, and preferably comprises a central recess arranged in its frontal part.

12. Device according to any one of Claims 1 to 11, in which the axial length of the projection (14) is substantially equal to the distance between two external radial faces belonging respectively to each of the two coaxial elements.

13. Friction clutch for a motor vehicle, comprising a torsion damping device, **characterized in that** this device is in accordance with one of Claims 1 to 12.

14. Dual mass flywheel for a motor vehicle, comprising a flywheel secured to a driving shaft and a flywheel secured to a driven shaft, **characterized in that** these two flywheels are the two coaxial elements of a device according to one of Claims 1 to 12.

15. Clutch for a motor vehicle, comprising a torsion damping device, **characterized in that** this torsion damping device is in accordance with one of Claims 1 to 12.
